Europäisches Patentamt

European Patent Office

Office européen des brevets

(19)

(11)  **EP 1 211 794 B1**

(12)  **EUROPÄISCHE PATENTSCHRIFT**

(45) Veröffentlichungstag und Bekanntmachung des Hinweises auf die Patenterteilung:
**06.07.2005  Patentblatt 2005/27**

(51) Int Cl.⁷: **H02M 3/335**, H02M 1/00

(21) Anmeldenummer: **01128720.8**

(22) Anmeldetag: **03.12.2001**

(54) **Verfahren zur Regulierung des Ausgangsstroms und/oder der Ausgangsspannung eines Schaltnetzteils**

Method for regulation of output current and/or output voltage of switched mode power supply

Procédé de regulation de courant de sortie et/ou tension de sortie d'alimentation à découpage

(84) Benannte Vertragsstaaten:
**AT BE CH CY DE DK ES FI FR GB GR IE IT LI LU MC NL PT SE TR**

(30) Priorität: **04.12.2000  DE 10060344**
             **03.09.2001  DE 10143016**

(43) Veröffentlichungstag der Anmeldung:
**05.06.2002  Patentblatt 2002/23**

(73) Patentinhaber: **FRIWO Gerätebau GmbH**
**48346 Ostbevern (DE)**

(72) Erfinder: **Schröder gen. Berghegger, Ralf, Dipl.-Ing.**
**49219 Glandorf (DE)**

(74) Vertreter: **Ackmann, Günther, Dr.-Ing. et al**
**Ackmann, Menges & Demski,**
**Patentanwälte**
**Tonhallenstrasse 16**
**47051 Duisburg (DE)**

(56) Entgegenhaltungen:
**DE-A- 19 711 771          US-A- 4 967 332**

• **PATENT ABSTRACTS OF JAPAN vol. 1997, no. 02, 28. Februar 1997 (1997-02-28) & JP 08 275389 A (MITSUBISHI ELECTRIC CORP), 18. Oktober 1996 (1996-10-18)**
• **PATENT ABSTRACTS OF JAPAN vol. 1999, no. 02, 26. Februar 1999 (1999-02-26) & JP 10 304658 A (YOKOGAWA ELECTRIC CORP), 13. November 1998 (1998-11-13)**
• **PATENT ABSTRACTS OF JAPAN vol. 2000, no. 08, 6. Oktober 2000 (2000-10-06) & JP 2000 134914 A (NEC IC MICROCOMPUT SYST LTD), 12. Mai 2000 (2000-05-12)**
• **PATENT ABSTRACTS OF JAPAN vol. 1997, no. 05, 30. Mai 1997 (1997-05-30) & JP 09 019143 A (YOKOGAWA ELECTRIC CORP), 17. Januar 1997 (1997-01-17)**

**Beschreibung**

Die Erfindung betrifft ein Verfahren zur Regelung des Ausgangsstroms und/oder der Ausgangsspannung eines primär getakteten Schaltnetzteiles mit einem Transformator und einer Steuerschaltung, in welchem durch die Verbindung einer Wicklung des Transformators mit dem Eingang einer Steuerschaltung entnommene Spannung die im Transformator gespeicherte Energie gemessen und die Spannungsbeaufschlagungszeit des Primärkreises des Transformators in einem Regelzyklus in Abhängigkeit eines Vergleiches des so ermittelten Messwertes mit einem Referenzwert variiert wird. Ein Verfahren dieser Art ist in der Offenlegungsschrift DE19711771A1 beschrieben. Die Erfindung befrifft zudem ein primärgetaktetes Schaltnetzteil zur Auführung des oben genannten Verfahrens.

Bei Schaltnetzteilen nach dem Flusswandlerprinzip und bei freischwingenden Sperrwandlern kann der Ausgangsstrom durch Begrenzung des Primärstromes im Transformator eingestellt werden. Dabei entsteht eine Strombegrenzung, die ein- und ausgangsspannungsabhängig und somit nicht für alle vorgesehen Anwendungsfälle einsetzbar ist. Die Ausgangsspannungsabhängigkeit kann durch geeignete Schaltungsdimensionierungen relativ klein gehalten werden, erfordert jedoch einen erhöhten Schaltungsaufwand und verursacht somit zusätzliche Kosten. Die Eingangsspannungsabhängigkeit entsteht durch die konstante Verzogerung der Abschaltung bei spannungsabhängig unterschiedlicher Steigung des Stromes und muss durch zusätzliche Beschaltung begrenzt werden, welche ebenfalls einen erhöhten Schaltungsaufwand erfordern und somit zusätzliche Kosten verursachen. Daneben sind Schaltnetzteile ohne Optokoppler bekannt, welche in der Regel eine schlechte Lastausreglung besitzen und somit zu einer hohen Ausgangsspannung bei geringem Ausgangsstrom und zu einer niedrigen Ausgangsspannung bei einem großen Ausgangsstrom führen.

Schaltnetzteile der gattungsgemäßen Art werden bevorzugt zur Spannungsversorgung von elektrischen oder elektronischen Geräten mit niedriger Versorgungsspannung eingesetzt und werden in großer Zahl benötigt, so dass eine möglichst kostengünstige Schaltungsanordnung gewählt werden muss, welche darüber hinaus die bestehenden Nachteile beseitigt.

Der Erfindung liegt die Aufgabe zugrunde, ein Verfahren, sowie eine Schaltung aufzuzeigen, welche eine nahezu lastunabhängige Spannung- und/oder Stromregelung mit verhältnismäßig geringem Schaltungsaufwand ermöglicht und eine Sicherheitsfunktion gegenüber hohen sekundärseitigen Ausgangsspannungen aufweist.

Erfindungsgemäß ist zur Losung dieser Aufgabe vorgesehen, dass die Spannung jeweils in einem festen zeitlichen Abstand nach Unterbrechung des Primärkreises durch Abschalten der Steuerleitung eines elektronischen Schalters gemessen und zwischengespeichert wird und der am Eingang der Steuerschaltung anliegende Messwert während der Einschaltdauer des elektronischen Schalters ständig überwacht wird und bei einer fehlenden oder unterbrochenen Verbindung des Einganges der Steuerschaltung zu der Wicklung des Transformators der elektronische Schalter ausgeschaltet oder die Ausschaltdauer des elektronischen Schalters soweit verlängert wird, dass die durch den Transformator übertragene Energie einen Minimalwert annimmt.

Der am Eingang anliegende Spannungswert ermöglicht einerseits die Feststellung einer Störung im Primärkreis, beispielsweise durch eine fehlende oder unterbrochene Verbindung des Einganges U und andererseits im Falle einer Abweichung von einem erwarteten Spannungsintervall kann eine sofortige Regelung und Beeinflussung des elektronischen Schalters erfolgen, sodass sekundärseitig keine Erhöhung der Ausgangsspannung eintritt. Mit dieser zusätzlichen Überwachungseinrichtung wird somit einem erhöhten Sicherheitsbedürfnis eines Schaltnetzteils Rechnung getragen. Hierbei besteht die Möglichkeit, dass die übertragene Energie soweit verringert wird, dass eine geringe sekundärseitige Last ausreicht, um die Spannung im ungefährlichen Bereich zu halten. Als Ausgangslast reicht beispielsweise der in der Schaltung vorhandene sekundärseitige Lastwiderstand. Somit ist ein gefahrloser Betrieb des Schaltnetzteils bei allen Lastfällen oder ggf. bei Unterbrechung der Zuleitung zum Eingang U gewährleistet. Alternativ besteht die Möglichkeit im Störungsfall den elektronischen Schalter sofort auszuschalten, wodurch ebenfalls eine Erhöhung der sekundärseitigen Ausgangsspannung verhindert wird. Zur Vermeidung einer eventuellen Fehlfunktion während des Einschaltvorganges ist erfindungsgemäß vorgesehen, dass bei der Überwachung der am Eingang U anliegenden Spannung die auftretende Verzögerung zwischen dem Einschaltimpuls der Steuerschaltung und dem Ansprechen des elektronischen Schalters entsprechend berücksichtigt wird. Eine Überwachung der Eingangsspannung kann sowohl auf negative als auch auf positive Spannungswerte ausgedehnt werden, wenn beispielsweise die zur Spannungserzeugung verwendete Hilfswicklung in ihrem Wicklungssinn umgedreht angeschlossen wird.

In Ausgestaltung der Erfindung ist in vorteilhafter Weise vorgesehen, dass der Ausgangstrom durch Einstellung des Tastverhältnisses des Sekundärstroms geregelt wird und wobei speziell zur Einstellung eines konstanten Ausgangsstroms ein konstantes Tastverhältnis des Sekundärstroms eingestellt wird.

Hierdurch wird der Ausgangsstrom bei konstant gehaltenem Abschaltstrom ebenfalls konstant. Durch die Verwendung eines schaltungsintern gebildeten Messwerts zur Beeinflussung der Steuerschaltung wird ferner eine nahezu lastunabhängige Spannungsregelung mit wenigen Bauelementen ermöglicht. Beispielsweise besteht die Möglichkeit den Zeitpunkt zur Speicherung des Messwertes so festzulegen, dass zum Zeitpunkt der Speicherung der Strom im Wandler unabhängig von der sekundären Belastung ist. Hierdurch ergibt sich im Weiteren der Vorteil, dass bei geringer Belastung mit einer erheblich niedrigeren Taktfrequenz des Schaltnetzteils gearbeitet werden kann, wodurch eine sehr geringe Leerlaufeingangsleistung erzielt wird. Ferner kann bei derartigen Schaltungsanordnungen auf die Verwendung eines Optokopplers verzichtet werden, so dass erhebliche Kosten eingespart werden können.

Bei der Verwendung eines konstanten Tastverhältnisses des Sekundärstromes besteht die Möglichkeit eine Stromreglung in derart vorzunehmen, dass die Länge der Sekundär-Strompause durch verzögern des Primär-Einschaltimpulses variiert wird. Demgegenüber kann eine Spannungsreglung durch einen konstanten Einschaltimpuls des elektronischen Schalters erfolgen, wobei die Abschaltzeit entsprechend variiert werden kann.

In Ausgestaltung der Erfindung ist vorgesehen, dass der elektronische Schalter für den Primärstrom durch die Steuerschaltung durch ein Ausgangssignal, welches gegenüber dem ursprünglichen Ausgangssignal verzögert ist, angesteuert wird, wodurch eine Einstellung des Tastverhältnisses möglich wird. Im Bedarfsfall kann die Ansteuerung des elektronischen Schalter über einen Vorwiderstand erfolgen.

In Ausgestaltung der Erfindung ist im Weiteren vorgesehen, dass als Messwert die induzierte Spannung einer Hilfswicklung des Transformators verwendet wird oder das ein Hochspannungs- IC für die Spannungsregelung eingesetzt wird und als Messwert die Spannung der Primärhauptwicklung des Transformators verwendet wird, wodurch die Möglichkeit besteht, ausgangsseitig eine Trennung von der Hochspannungsseite vorzunehmen und im Falle der Hilfswicklung kann in einer bevorzugten Ausführung ferner mit einem niedrigen Spannungspotential primärseitig gearbeitet werden. Darüber hinaus verursacht die Anfertigung derartiger Transformatoren nur geringe Zusatzkosten und führt zu einem erheblichen Kostenvorteil gegenüber herkömmlichen Schaltungsanordnungen. In weiterer Ausgestaltung ist hierbei vorgesehen, dass der Messwert zu einem festen, aber variabel einstellbaren Zeitpunkt nach Unterbrechung des Primärkreises zwischengespeichert wird.

In weiterer vorteilhafter Ausgestaltung der Erfindung ist vorgesehen, dass der Messwert mit einem internen Referenzwert der Steuerschaltung verglichen wird und in Abhängigkeit von der zeitlichen Höhe der Überschreitung durch den Messwert die Zeit zur erneuten Spannungsbeaufschlagung des Primärkreises bestimmt werden kann. Dadurch, dass die Höhe der Überschreitung schaltungstechnisch bei einer erneuten Spannungsbeaufschlagung des Primärkreises mit berücksichtigt wird, kann das Schaltverhalten des Schaltnetzteils in vorteilhafter Weise beeinflusst werden, sodass die Zykluszeit optimiert werden kann. Eine weitere Ausgestaltung der Erfindung kann dahingehend vorgenommen werden, dass eine erneute Spannungsbeaufschlagung des Primärkreises bis zum Erreichen eines maximalen Stroms des Transformators erfolgt. Durch diese Maßnahmen wird in Abhängigkeit von dem gespeicherten Messwert die Dauer der Ausschaltzeit des Leistungsschalters eingestellt, wobei die Ausschaltzeit um so größer ist, je höher die gespeicherte Spannung war. Nach Ablauf der Ausschaltzeit wird der Leistungsschalter so lange eingeschaltet, bis der Strom durch den Transformator den voreingestellten Maximalwert erreicht und somit ein neuer Zyklus beginnt. Als Leistungsschalter wird üblicherweise ein Feldeffekttransistor verwendet, während hingegen die Speicherung durch beispielsweise ein sample and hold Element erfolgt.

In alternativer Ausgestaltung der Erfindung wird vorgeschlagen, dass der Strom des Transformators mit einem zeitabhängigen Referenzwert verglichen wird, wobei der Referenzwert gebildet wird durch

$$\text{Referenz } (t_{ein}) = \text{Abschaltwelle}/(1 + \text{Abschaltverzögerungszeit}/t_{ein})$$

$$(\text{für } t_{ein} > \text{minimale Einschaltzeit})$$

Durch den Vergleich des Referenzwertes mit dem Strom des Transformators kann somit ein Ausgleich der unterschiedlichen Stromanstiegsgeschwindigkeiten vorgenommen werden, so dass bei großer Anstiegsgeschwindigkeit der Abschaltvorgang eher eingeleitet wird und somit ein spannungsunabhängiger Abschaltpunkt vorliegt. Der besondere Vorteil der sich hieraus ergibt liegt darin, dass eine nahezu eingangsspannungsunabhängige Strombegrenzung ermöglicht wird, die ebenfalls in einem Niederspannungs-IC integriert werden kann, da keine Verbindung zum höheren Spannungspotential notwendig ist.

In weiterer Ausgestaltung der Erfindung wird zur Anwendung des vorstehend beschriebenen Verfahrens eine Schaltungsanordnung aufgezeigt, welche dadurch gekennzeichnet ist, dass die Spannungsversorgung der Steuerschaltung durch einen Linear- oder Schaltregler erfolgt. Zu diesem Zweck liefert beispielsweise eine Hilfswicklung des Transformators eine Messspannung für die Steuerschaltung. Alternativ besteht die Möglichkeit, dass die Steuerschaltung als Hochspannungs-IC ausgebildet ist und als Messspannung die Spannung der Primärhauptwicklung anliegt. In der Schaltungsanordnung übernimmt die Steuerschaltung die Zu- oder Abschaltung eines elektronischen Schalters zur Spannungsbeaufschlagung der primärseitigen Hauptwicklung. Der elektronische Schalter wird hierbei ggf. über einen Vorwiderstand durch die Steuerschaltung angesteuert, wobei eine Ansteuerung über ein verzögertes Ausgangssignal erfolgen kann. Hierbei wird das Ausgangssignal in soweit verzögert, dass das Tastverhältnis des Sekundärstromes konstant gehalten wird. Dadurch wird der mittlere Ausgangsstrom proportional zum Primärpeakstrom, sodass bei konstantem Abschaltstrom demzufolge der Ausgangsstrom ebenfalls konstant ist.

Eine Hilfswicklung des Transformators liefert zur Steuerung eine Messspannung, welche erfindungsgemäß zu einem festen, einstellbaren Zeitpunkt nach Unterbrechung des Primärkreises speicherbar ist, wodurch der bereits aufgeführte Vorteil einer nahezu lastunabhängigen Ausgangsspannung entsteht. Eine erneute Spannungsbeaufschlagung des Primärkreises kann im weiteren in Abhängigkeit von der Höhe der Überschreitung des internen Referenzwertes der Steuerschaltung erfolgen, sodass ein Einfluss auf die Zykluszeit und damit auf die Taktrate vorgenommen werden kann.

In weiterer Ausgestaltung der Erfindung ist schaltungstechnisch vorgesehen, dass der Primärkreis in Abhängigkeit der induzierten Spannung der Hilfswicklung, vorzugsweise bei einem Wert < 0,1 Volt, wiedereinschaltbar ist.

In weiterer besonderer Ausgestaltung der Erfindung ist vorgesehen, dass die Ansteuerspannung für den elektronischen Schalter zusätzlich durch eine Spannung proportional zum Verhältnis

$$\frac{\text{Einschaltzeit} + \text{Ausschaltzeit}}{\text{Einschaltzeit}}$$

überlagert ist.

Die erfindungsgemäß verwendete Steuerschaltung besteht hierbei aus einem einzelnen selbst entwickelten IC, in welchem sämtliche Funktionen integriert sind. Das IC wird mit der notwendigen Versorgungsspannung bzw. den notwendigen Spannungen beaufschlagt, sodass eine Ansteuerung des elektronischen Schalters erfolgen kann.

Die Erfindung wird im Weiteren an Hand von vier Schaltungsbeispielen erläutert.

Es zeigt

Fig. 1     einen Stromlaufplan eines ersten Schaltungsbeispiels eines Spannungsreglers mit Linearregler zur Versorgung des Steuerschaltkreises,

Fig. 2     ein Schaltungsbeispiel eines Spannungsreglers mit Schaltregler zur Versorgung des Steuerschaltkreises,

Fig. 3     einen Stromlaufplan eines Spannungsreglers mit Linearregler zur Versorgung des Steuerschaltkreises, wobei der Schalter über ein verkürztes Signal angesteuert wird und

Fig. 4     ein Stromlaufplan eines Spannungsregler mit Linearregler gemäß Figur 3, wobei als Referenzwert die Spannung der Primärhauptwicklung verwendet wird.

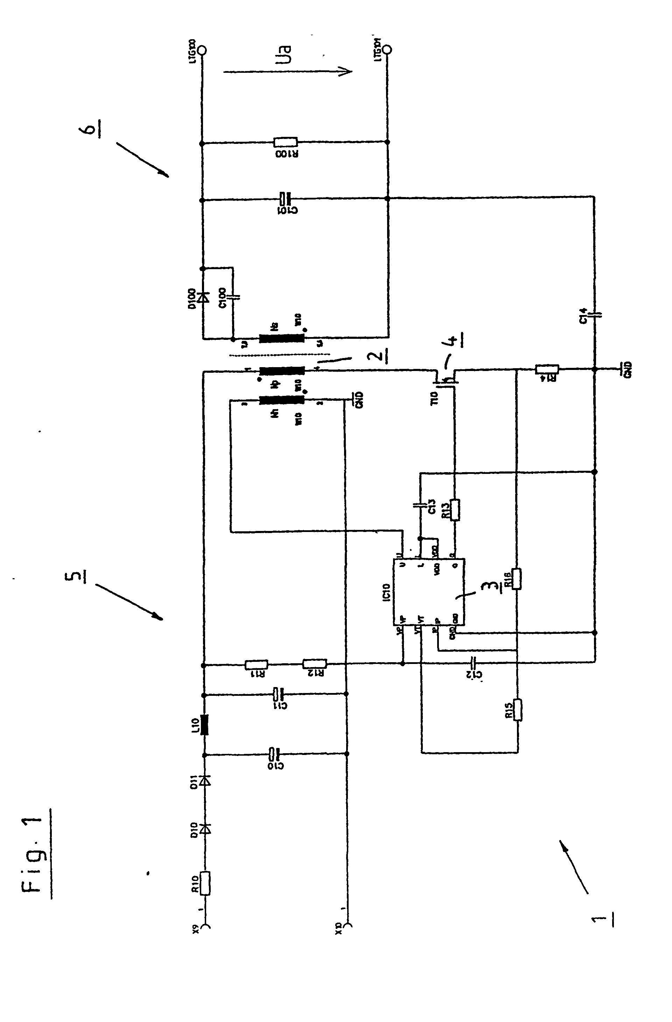

Figur 1 zeigt in einem ersten Ausführungsbeispiel einen Stromlaufplan eines Schaltnetzteils 1, welches einen Transformator 2, eine Steuerschaltung 3 und einen elektronischer Schalter 4 sowie weitere Schaltungskomponenten aufweist. An den Eingängen X9, X10 erfolgt der Anschluss der Netzwechselspannung, während an den Ausgängen LTG100 und LTG101 die Ausgangsspannung Ua anliegt, und zwar an dem Ausgang LTG100 das Pluspotential. In den Primärkreis 5 des Transformators 2 ist ein Vorwiderstand R10, zwei Dioden D10, D11 sowie eine Spule L10 in Reihe geschaltet, während zwei Glättungskondensatoren C10, C11 parallel zu den Eingängen X9, X10 geschaltet sind und wobei der Kondensator C10 einerseits an der Kathode der Diode D11 bzw. mit der Induktivität L10 verbunden ist, während der zweite Pol mit dem Eingang X10 verbunden ist. Der zweite Kondensator C11 ist hingegen unmittelbar parallel zur Sekundärwicklung des Transformators 2 hinter der Induktivität L10 geschaltet.

Der Sekundärkreis 6 weist hingegen eine in Reihe geschaltete Diode D100 sowie einen hierzu parallel geschalteten Kondensator C100 auf. Ein Kondensator C101 mit einem parallel geschalteten Widerstand R100 ist einerseits mit dem Ausgang LTG100 und andererseits mit dem Ausgang LTG101 verbunden. An C11 liegt die gleichgerichtete Netzspannung an, während an C101 die gleichgerichtete Ausgangsspannung anliegt.

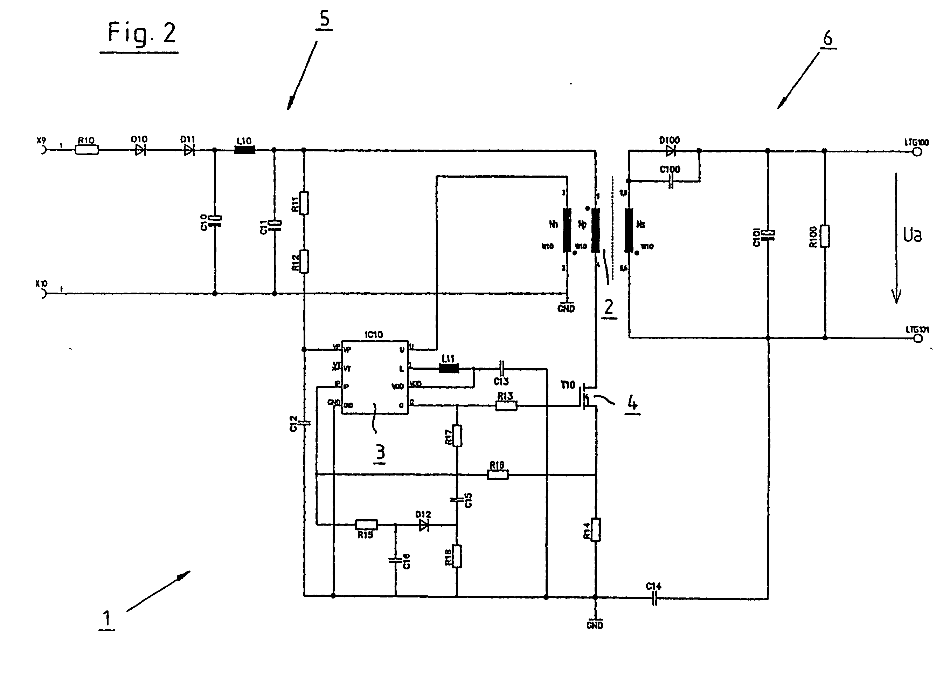

Über die Widerstände R11 und R12 erhält die Steuerschaltung 3 bzw. der integrierte Schaltkreis IC10 die Versorgungsspannung. Die Anschlüsse VT, GND, L und VDD dienen ebenfalls der Versorgung des integrierten Schaltkreises IC10 mit einer geregelten Betriebsspannung. Der integrierte Schaltkreis IC10 kann als Schaltregler gemäß Figur 1 oder als Linearregler gemäß Figur 2 eingesetzt werden. Zum Betrieb als Linearregler sind die Ausgänge L und VDD miteinander verbunden, wie in Figur 1 gezeigt. Der Ausgang G des integrierten Schaltkreises IC10 ist über einen Vorwiderstand R13 mit dem elektronischen Schalter 4, einem Feldeffekttransistor T10, verbunden. Die Ausgänge L und VDD sind im Weiteren über einen Kondensator C13 mit dem Groundpotential verbunden, während der Eingang U mit der Hilfswicklung Nh verbunden ist. Der Eingang VT und IP ist über die Widerstände R15, R16 an den Ausgang des Feldeffekttransistors T10 angeschlossen, welcher wiederum über den Widerstand R14 mit dem Groundpotential verbunden ist. Zwischen dem Groundpotential des Regelteils und dem Ausgang LTG101 ist im Weiteren ein Kondensator C14 in Reihe geschaltet.

Figur 2 zeigt einen Stromlaufplan, in dem der integrierte Schaltkreis IC10 als Schaltregler eingesetzt ist. Gegenüber der vorgenannten Schaltung gemäß Figur 1 wurde eine Induktivität L11 an die Ausgänge L und VDD angeschlossen. Der Ausgang VDD und der zweite Anschluss der Induktivität L11 ist über einen Kondensator C13 mit dem Groundpotential verbunden, während der Eingang U mit der Hilfswicklung Nh verbunden ist. Der Eingang VT des integrierten Schaltkreises IC10 ist hingegen offen und der Eingang IP wird wie bisher über den Widerstand R16 mit dem Ausgang des Feldeffekttransistors T10 verbunden. Im Weiteren wird über einen Spannungsteiler das Ausgangssignal G zur Ansteuerung des Eingangs IP mit herangezogen, wobei das Ausgangssignal über einen Widerstand R17, einen Kondensator C15, eine Diode D12 und einen Widerstand R15 dem Eingang IP zugeleitet wird. Die Diode D12 ist kathodenseitig über den Widerstand R17 und Kondensator C15 mit dem Ausgang G verbunden.

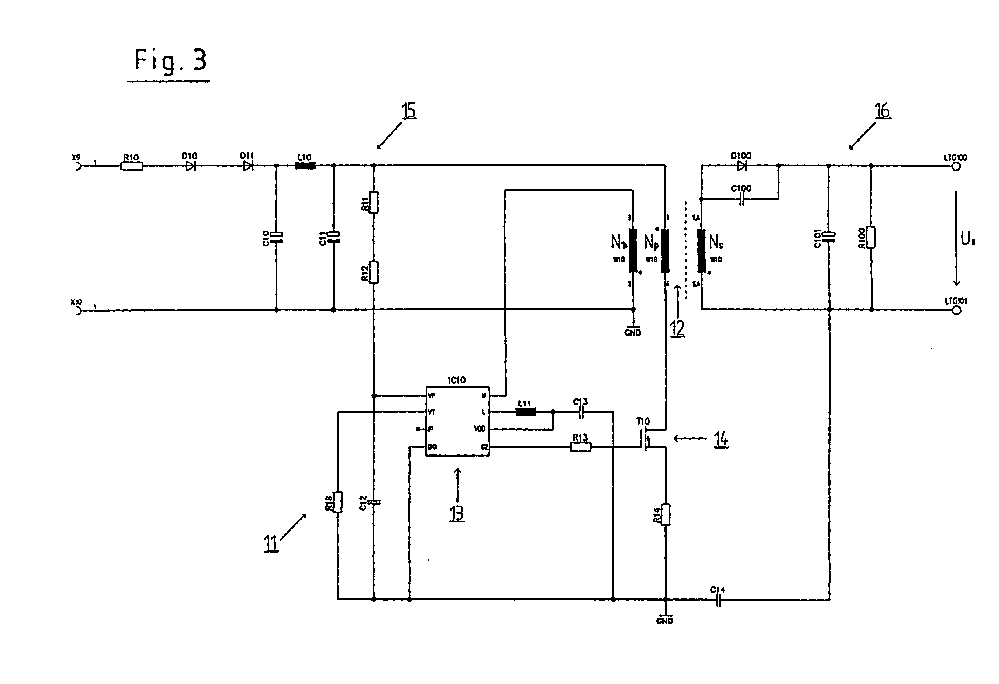

Figur 3 zeigt in einem weiteren Ausführungsbeispiel einen Stromlaufplan eines Schaltnetzteils 11, welches einen Transformator 12, eine Steuerschaltung 13 und einen elektronischen Schalter 14 sowie weitere Schaltungskomponenten aufweist. An den Eingängen X9, X10 erfolgt der Anschluss der Netzwechselspannung, während an den Ausgängen LTG100 und LTG101 die Ausgangsspannung Ua anliegt, und zwar an dem Ausgang LTG100 das Pluspotential. In den Primärkreis 15 des Transformators 12 ist ein Vorwiderstand R10, zwei Dioden D10, D11 sowie eine Spule L10 in Reihe geschaltet, während zwei Glättungskondensatoren C10, C11 parallel zu den Eingängen X9, X10 geschaltet sind und wobei der Kondensator C10 einerseits an der Kathode der Diode D11 bzw. mit der Induktivität L10 verbunden ist, während der zweite Pol mit dem Eingang X10 verbunden ist. Der zweite Kondensator C11 ist hingegen unmittelbar parallel zur Sekundärwicklung des Transformators 12 hinter der Induktivität L10 geschaltet.

Der Sekundärkreis 16 weist hingegen eine in Reihe geschaltete Diode D100 sowie einen hierzu parallel geschalteten Kondensator C100 auf. Ein Kondensator C101 mit einem parallel geschalteten Widerstand R100 ist einerseits mit dem Ausgang LTG100 und andererseits mit dem Ausgang LTG101 verbunden.

An C11 liegt die gleichgerichtete Netzspannung an, während an C101 die gleichgerichtete Ausgangsspannung anliegt.

Über die Widerstände R11 und R12 erhält der integrierte Schaltkreis IC10 die Versorgungsspannung. Die Anschlüsse GND, L und VDD dienen ebenfalls der Versorgung des integrierten Schaltkreises IC10 mit einer geregelten Betriebsspannung. Der integrierte Schaltkreis IC10 ist wiederum als Schaltregler geschaltet. An die Ausgänge L und VDD ist eine Induktivität L11 angeschlossen, wie aus Figur 2 bekannt. Der Ausgang G2 des integrierten Schaltkreises IC10 ist über einen Vorwiderstand R13 mit dem elektronischen Schalter 14, einem Feldeffekttransistor T10 verbunden. Der Ausgang VDD und der zweite Anschluss der Induktivität L11 ist über einen Kondensator C13 mit dem Groundpotential verbunden, während der Eingang U mit der Hilfswicklung Nh verbunden ist. Der Eingang Ip ist offen. Der Ausgang des Feldeffekttransistors T10 ist über den Widerstand R14 mit dem Groundpotential verbunden. Zwischen dem Groundpotential des Regelteils und dem Ausgang LTG101 ist im Weiteren ein Kondensator C14 in Reihe geschaltet. Der Eingang VT ist über einen Widerstand R18 mit Groundpotential verbunden. Eine weitere Beschaltung, wie in Figur 2 vorhanden, entfällt.

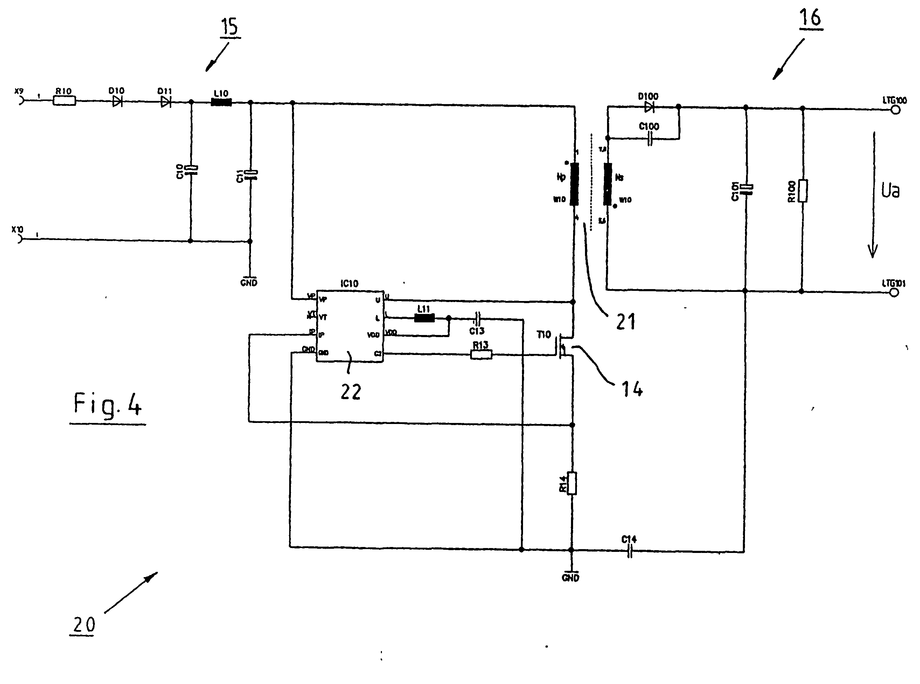

Figur 4 zeigt in einem weiteren Ausführungsbeispiel einen Stromlaufplan eines Schaltnetzteils 20, welches einen Transformator 21, eine Steuerschaltung 22 und einen elektronischen Schalter 14 sowie weitere Schaltungskomponenten aufweist. Der Stromlaufplan entspricht weitestgehend der Ausführung gemäß Figur 3, wobei als Steuerschaltung 22 ein Hochspannungs-IC eingesetzt wird und der Transformator 21 keine Hilfswicklung aufweist. An den Eingängen X9, X10 erfolgt der Anschluss der Netzwechselspannung, während an den Ausgängen LTG100 und LTG101 die Ausgangsspannung Ua anliegt, und zwar an dem Ausgang LTG100 das Pluspotential. Der Primärkreis 15 und der Sekundärkreis 16 sind identisch mit dem in Figur 3 gezeigten Schaltnetzteil. Eine Abweichung gegenüber diesem Stromlaufplan besteht darin, dass die Steuerschaltung 22 mit ihrem Eingang VP unmittelbar mit der Primärhauptwicklung Np verbunden ist, deren zweiter Anschluss einerseits mit dem elektronischen Schalter 14 und andererseits mit dem Eingang U der Steuerschaltung 22 unmittelbar verbunden ist. Der Eingang VT der Steuerschaltung 22 ist gegenüber der Schaltung gemäß Figur 3 unbeschaltet, während der Eingang Ip unmittelbar mit dem Ausgang des Feldeffekttransistor T10 verbunden ist.

Die Funktion der Spannungsregelung stellt sich wie folgt da. Der integrierte Schaltkreis IC10 schaltet den Ausgang G auf high, wodurch der Feldeffekttransistor T10 eingeschaltet wird. Hierdurch steigt der Strom durch die Wicklung Np des Wandlers W10 an, wobei derselbe Strom auch durch den Widerstand R14 fließt. Bei Erreichen der Abschaltschwelle an dem Anschluss IP des integrierten Schaltkreises IC10 wird Anschluss G auf low geschaltet und dadurch der Feldeffekttransistor T10 ausgeschaltet. Auf Grund der magnetischen Kopplung der drei Wicklungen des Transformators 2 werden in allen Wicklungen Spannungen induziert. Durch Nsek fließt zunächst ein Strom folgender Größe:

$$Isek = IP * Np / Nsek$$

Danach sinkt der Strom auf null ab. Währenddessen ist die Spannung an Nsek gleich der Summe der Spannungen an D100 und der Ausgangsspannung. Solange der Strom größer als null ist stehen die Spannungen an den Wicklungen im gleichen Verhältnis zueinander wie die Windungszahlen. Dies wird zur Reglung der Ausgangsspannung ausgenutzt. Dadurch, dass die magnetische Kopplung der Wicklungen zueinander nicht ideal ist, entsteht nach dem Abschalten von T10 zunächst ein Spannungsüberschwinger, bevor sich die Spannung an Nh auf die übertragene Spannung

$$U(Nh) = U(Nsek) * Nh / Nsek$$

einschwingt. Aus dem vorgenannten Grund darf deshalb nicht der Spitzenwert der Spannung an Nh zur Spannungsreglung an Nh ausgewertet werden. Die Auswertung darf erst erfolgen, wenn die Schwingungen abgeklungen sind. Im Weiteren ist der Spannungsabfall an D100 spannungsabhängig, wodurch die Spannung an Nh während des Stromflusses nicht konstant ist. Außerdem muss der Transistor oder Feldeffekttransistor T10 länger abgeschaltet werden als Strom durch Nsek fließt, so dass während eines Teils der Abschaltzeit keine Spannung mehr an Nh zur Verfügung steht, die von der Ausgangsspannung abhängig ist und ausgewertet werden kann. Um die vorstehenden Probleme zu lösen wird bei dem erfindungsgemäßen Regelungsprinzip jeweils in einem festen zeitlichen Abstand nach dem Abschalten von G bzw. G2 (Figur 3) die Spannung an U mit einem sample and hold Element gespeichert. Dadurch erhält man einen Messwert, der weitgehend unabhängig von der Kopplung der Wicklung ist, weil zum Messzeitpunkt die Schwingungen bereits abgeklungen sind. Außerdem ist sichergestellt, dass bei jeder Messung der Strom durch D100 gleich ist und somit auch die Spannung an D100 gleich ist. Überschreitet nun der Messwert den internen Referenzwert in IC10 wird in Abhängigkeit von der Höhe der Überschreitung die Zeit bis zum nächsten Einschalten von G bzw. G2 (Figur 3) eingestellt. Je größer die Überschreitung ist, desto länger die Abschaltdauer. In einem Bereich von 4 % der Referenzspannung variiert dabei die Abschaltdauer von 0 bis 10 ms, so dass bei geringer Belastung die Taktfrequenz auf minimale 100 Hertz zurückgeht und dabei die Ausgangsleistung auf einige mW absinkt. Eine Grundlast von wenigen mW im Gerät reicht demzufolge aus, um die Ausgangsspannung in einen Lastbereich von Nennlast (einige Watt) bis zum Leerlauf im Bereich von Unenn +/- 2 % zu halten. Nach Ablauf der Abschaltdauer wird G bzw. G2 wieder auf high gestellt, sofern die im Wandler gespeicherte Energie bereits vollständig zur Sekundärseite übertragen wurde, ansonsten wirkt die Stromreglung wie nachstehend beschrieben und ein neuer Zyklus beginnt.

Die Funktion der Stromregelung erfolgt dadurch, dass nach dem Abschalten von T10 das Ausgangssignal G bzw. G2 (Figur 3) mindestens solange ausgeschaltet bleibt, bis die Spannung am Anschluss U von IC10 auf < 0,1 Volt zurückgeht. Dadurch wird erreicht, dass die im Wandler gespeicherte Energie vollständig zur Sekundärseite übertragen wird. Wenn der Wandler W10 so aufgebaut ist, dass die Einschaltzeit von T10 bei Nennlast sehr viel kürzer ist als die Ausschaltzeit, ergibt sich daraus eine Ausgangsstrombegrenzung, die bei kleiner Ausgangsspannung, z. B. Kurzschluss, nur wenig größer ist als bei Nennausgangsspannung. Um die Steilheit der Strombegrenzung zu verbessern kann erfindungsgemäß dem Spannungsabfall an R14 eine Spannung überlagert werden, die proportional zum Verhältnis

$$(Einschaltzeit (G) + Ausschaltzeit (G)) / Einschaltzeit (G)$$

ist. Dieses Signal erzeugt IC10, es steht am Anschluss VT zur Verfügung.

Alternativ besteht die Möglichkeit das Signal auch aus dem Gatesignal, gemäß Figur 2, zu erzeugen, wenn die Spannung am eingeschalteten G konstant ist.

Eine weitere Möglichkeit gemäß Figur 3 die Strombegrenzung ausgangsspannungunabhängig zu realisieren besteht darin, das T10 nicht direkt durch das Ausgangssignal G des Spannungsreglers 14 angesteuert wird, sondern durch ein Ausgangssignal G2, welches gegenüber G soweit verkürzt ist, dass das Tastverhältnis dsek des Sekundärstroms konstant wird. Dadurch wird der mittlere Ausgangsstrom proportional zum Primärpeakstrom Ip. Bei konstantem Abschaltstrom Ip ist ferner der Ausgangsstrom Ia konstant.

$$Ia = Ip * Np/Ns/2 * dsek$$

Np= Primärwindungszahl
Ns= Sekundärwindungszahl

Da die Netzwechselspannung stark variiert, insbesondere bei Geräten, die in verschiedenen Ländern, wie z. B. in den USA mit 110 Volt und in Europa mit 230 Volt betrieben werden können, ist die Anstiegsgeschwindigkeit des Stroms in Np nicht konstant. Auf Grund der Verzögerungszeit zwischen Überschreiten der Referenz an IP und Abschaltung von T10 kommt es bei unterschiedlichen Eingangsspannungen zu verschiedenen Abschaltströmen, wenn eine konstante Referenz benutzt wird. Um dies zu verhindern wird erfindungsgemäß eine Referenz benutzt, die nach folgender Formel ansteigt:

$$\text{Referenzspannung } (t_{ein}) = \text{Abschaltschwelle} / (1 + \text{Abschaltverzögerungszeit}/(t_{ein})).$$

Hierdurch wird erreicht, dass der Abschaltstrom nahezu eingangsspannungsunabhängig ist und die erfindungsgemäßen Vorteile entstehen.

Der in Figur 4 gezeigte Stromlaufplan eines Schaltnetzteils 20 verzichtet auf eine Hilfswicklung, sodass eine als Hochspannungs-IC verwendete Steuerschaltung 22 mit dem Eingang VP mit der Betriebsspannung versorgt wird und als zweiter Messpunkt die Spannung der Primärhauptwicklung Np an U anliegt. Das Regelprinzip ist identisch mit den weiteren Schaltreglern, lediglich die Spannung an R wird durch die Spannung Np ersetzt.

**Bezugszeichenliste**

| | |
|---|---|
| 1 | Schaltnetzteil |
| 2 | Transformator |
| 3 | Steuerschaltung |
| 4 | elektronischer Schalter |
| 5 | Primärkreis |
| 6 | Sekundärkreis |
| 11 | Schaltnetzteil |
| 12 | Transformator |
| 13 | Steuerschaltung |
| 14 | elektronischer Schalter |
| 15 | Primärkreis |
| 16 | Sekundärkreis |
| 20 | Schaltnetzteil |
| 21 | Transformator |
| 22 | Steuerschaltung |
| C10 | Glättungskondensator |
| C11 | Glättungskondensator |
| C13 | Kondensator |
| C14 | Kondensator |
| C15 | Kondensator |
| C100 | Kondensator |
| C101 | Kondensator |
| D10 | Diode |
| D11 | Diode |
| D12 | Diode |
| D100 | Diode |
| IC10 | Schaltkreis |
| IP | Strom in W10 |
| L10 | Spule |
| L11 | Induktivität |
| LTG100 | Ausgang |
| LTG101 | Ausgang |
| Nh | Hilfswicklung |
| Np | Wicklung (primär) |
| Ns | Wicklung (sekundär) |
| R10 | Vorwiderstand |
| R11 | Widerstand |
| R12 | Widerstand |
| R13 | Vorwiderstand |
| R14 | Widerstand |
| R15 | Widerstand |
| R16 | Widerstand |

| R17 | Widerstand |
| R18 | Widerstand |
| R100 | Widerstand |
| T10 | Feldeffekttransistor |
| U | Referenzspannung |
| W10 | Wandler |
| X9 | Eingang |
| X10 | Eingang |

**Patentansprüche**

1. Verfahren zur Regelung des Ausgangsstroms und/oder der Ausgangsspannung eines primär getakteten Schaltnetzteiles mit einem Transformator (2, 12, 21) und einer Steuerschaltung (3, 13, 22), in welchem durch die über eine Verbindung einer Wicklung (Nh, Np) des Transformators (2, 12, 21) mit dem Eingang (U) der Steuerschaltung (3, 13, 22) entnommene Spannung die im Transformator (2, 12, 21) gespeicherte Energie gemessen und die Spannungsbeaufschlagungszeit des Primärkreises des Transformators (2, 12, 21) in einem Regelzyklus in Abhängigkeit eines Vergleiches des so ermittelten Messwertes mit einem Referenzwert variiert wird,
**dadurch gekennzeichnet,**
**dass** die Spannung jeweils in einem festen zeitlichen Abstand nach Unterbrechung des Primärkreises durch Abschalten der Steuerleitung (G) eines elektronischen Schalters (4,14) gemessen und zwischengespeichert wird und der am Eingang (U) der Steuerschaltung (3, 13, 22) anliegende Messwert während der Einschaltdauer des elektronischen Schalters (4,14) ständig überwacht wird und bei einer fehlenden oder unterbrochenen Verbindung des Einganges (U) der Steuerschaltung (3,13,22) zu der Wicklung (Nh,Np) des Transformators der elektronische Schalter (4, 14) ausgeschaltet oder die Ausschaltdauer des elektronischen Schalters (4, 14) soweit verlängert wird, dass die durch den Transformator übertragene Energie einen Minimalwert annimmt.

2. Verfahren nach Anspruch 1,
**dadurch gekennzeichnet,**
**dass** die Spannung dann gemessen und zwischengespeichert wird, wenn die Spannungsschwingungen in den Wicklungen abgeklungen sind.

3. Verfahren nach Anspruch 1 oder 2,
**dadurch gekennzeichnet,**
**dass** die übertragenen Energie soweit verringert wird, dass eine geringe sekundärseitige Last ausreicht, um die Spannung im ungefährlichen Bereich zu halten.

4. Verfahren nach Anspruch 1,2 oder 3,
**dadurch gekennzeichnet,**
**dass** bei der Überwachung des am Eingang (U) anliegenden Messwertes die auftretende Verzögerung durch den Einschaltimpuls der Steuerschaltung (3,13,21) berücksichtigt wird.

5. Verfahren nach einem oder mehreren der Ansprüche 1 bis 4,
**dadurch gekennzeichnet,**
**dass** die Überwachung und Regelung der Ausgangsspannung durch die Steuerschaltung (3,13,21) mit einer negativen oder positiven Messspannung am Eingang (U) erfolgt.

6. Verfahren nach einem oder mehreren der Ansprüche 1 bis 5,
**dadurch gekennzeichnet,**
**dass** der Ausgangsstrom durch Einstellung des Tastverhältnisses des Sekundärstroms geregelt wird.

7. Verfahren nach einem oder mehreren der Ansprüche 1 bis 6,
**gekennzeichnet durch** die Einstellung eines konstanten Tastverhältnisses des Sekundärstromes.

8. Verfahren nach einem oder mehrere der Ansprüche 1 bis 7,
**dadurch gekennzeichnet,**
**dass** eine Spannungsregelung durch einen konstanten Einschaltimpuls des elektronischen Schalter (14) und einer veränderbaren Abschaltzeit erfolgt.

9. Verfahren nach einem oder mehreren der Ansprüche 1 bis 8,
**dadurch gekennzeichnet,**
**dass** der elektronische Schalter (14) für den Primärstrom (15) durch die Steuerschaltung (3,13,22) durch ein Ausgangssignal (G2), welches gegenüber dem Ausgangssignal (G) verzögert ist, angesteuert wird, wobei im Bedarfsfall ein Vorwiderstand (R13) verwendet wird.

10. Verfahren nach einem oder mehreren der Ansprüche 1 bis 9,
**dadurch gekennzeichnet,**
**dass** als Messwert die induzierte Spannung einer Hilfswicklung (Nh) des Transformators (2,12,21) verwendet wird oder dass ein Hochspannungs-IC für die Spannungsregelung eingesetzt wird und als Messwert die Spannung der Primärhauptwicklung (Np) des Transformators (3,12,21) verwendet wird.

11. Verfahren nach einem oder mehreren der Ansprüche 1 bis 10,
**dadurch gekennzeichnet,**
**dass** der Messwert mit einem internen Referenzwert der Steuerschaltung (3,13,23) verglichen wird und dass der Zeitpunkt der Spannungsbeaufschlagung der Wandlerhauptwicklung (Np) in Abhängigkeit von der Höhe der Überschreitung des internen Referenzwerts durch den Messwert eingestellt wird.

12. Verfahren nach einem oder mehreren der Ansprüche 1 bis 11,
**dadurch gekennzeichnet,**
**dass** die erneute Spannungsbesaufschlagung des Primärkreises (15) bis zum Erreichen eines maximalen Stroms des Transformators (2,12,21) erfolgt.

13. Verfahren nach einem oder mehreren der Ansprüche 1 bis 12,
**dadurch gekennzeichnet,**
**dass** der Strom des Transformators (2,12,21) mit einem zeitabhänigen Referenzwert verglichen wird.

14. Verfahren nach Anspruch 13,
**dadurch gekennzeichnet,**
**dass** als Referenzwert der Wert

$$\text{Referenz}\,(t_{ein}) = \text{Abschaltschwelle}/(1 + \text{Abschaltverzögerungszeit}/\,t_{ein})$$

$$(\text{für } t_{ein} > \text{minimale Einschaltzeit})$$

verwendet wird, wodurch der Maximalstrom gleichbleibend gehalten wird.

15. Primärgetaktetes Schaltnetzteil zur Ausführung des Verfahrens nach einem oder mehreren der Ansprüche 1 bis 14 mit einem Transformator (2,12,21), dessen Prmärwicklung mit einem elektronischen Schalter (4,14) in Reihe geschaltet ist, und einer Steuerschaltung (3,13,22), die über eine Verbindung einer Wicklung (Nh,Np) des Transformators (2,12,21) mit einem Eingang (U) der Steuerschaltung eine an der Wicklung (Nh,Np) des Transformators anliegende Spannung abgreift und **dadurch** die im Transformator (2,12,21) gespeicherte Energie misst und die Spannungsbeaufschlagungszeit des Primärkreises des Transformators (2,12,21) in einem Regelzyklus in Abhängigkeit eines Vergleiches des so ermittelten Messwertes mit einem Referenzwert variiert,
**dadurch gekennzeichnet, dass** die Steueschaltung in einem festen zeitlichen Abstand nach Unterbrechung des Primärkreises durch Abschalten einer Steuerleitung (G) eines elektronischen Schalters (4,14) die Spannung an der Wicklung (Nh,Np) des Transformators misst und zwischenspeichert und den am Eingang (U) anliegenden Messwert ständig überwacht, wobei die Steuerschaltung (3,13,22) im Falle einer fehlenden oder unterbrochenen Verbindung des Eingangs (U) der Steuerschaltung mit der Wicklung (Nh, Np) des Transformators den elektronischen Schalter (4,14) ausschaltet oder die Ausschaltdauer des elektronischen Schalters (4,14) soweit verlängert, dass die durch den Transformator übertragene Energie einen Minimalwert annimmt.

16. Schaltnetzteil nach Anspruch 15,
**dadurch gekennzeichnet,**
**dass** die Spannungsversorgung der Steuerschaltung (3,13,22) durch einen Linear- oder Schaltregler erfolgt.

17. Schaltnetzteil nach Anspruch 16,

**dadurch gekennzeichnet,**

**dass** eine Hilfswicklung (Nh) des Transformators (2,12,21) eine Messspannung (U) für die Steuerschaltung (3,13,22) liefert oder dass die Steuerschaltung (3,13,22) aus einem Hochspannungs-IC besteht und als Messspannung die Spannung der Primärhauptwicklung (Np) anliegt und dass der Primärkreis (15) einen elektronischen Schalter (14) aufweist.

18. Schaltnetzteil nach Anspruch 16 oder 17,
    **dadurch gekennzeichnet,**
    **dass** der elektronische Schalter (14) für den Primärkreis (15) durch die Steuerschaltung (3,13,23) über ein verzögertes Ausgangssignal (G2) ansteuerbar ist, wobei im Bedarfsfall die Ansteuerung über einen Vorwiderstand (R13) erfolgt.

19. Schaltnetzteil nach Anspruch 16, 17 oder 18,
    **dadurch gekennzeichnet,**
    **dass** der Messwert für die induzierte Spannung der Hilfswicklung (Nh) oder der Primärhauptwicklung (Np) zu einem festen, einstellbaren Zeitpunkt nach Unterbrechung des Primärkreises (15) speicherbar ist.

20. Schaltnetzteil nach einem oder mehreren der Ansprüche 16 bis 19,
    **dadurch gekennzeichnet,**
    **dass** der Zeitpunkt der Spannungsbeaufschlagung der Wandlerhauptwicklung (Np) in Abhängigkeit von der Höhe der Überschreitung des internen Referenzwertes der Steuerschaltung (3,13,22) durch den Messwert einstellbar ist.

21. Schaltnetzteil nach Anspruch 20,
    **dadurch gekennzeichnet,**
    **dass** der Primärkreis (15) in Abhängigkeit der induzierten Spannung der Hilfswicklung, vorzugsweise bei einem Wert von < 0,1 Volt, wiedereinschaltbar ist.

22. Schaltnetzteil nach einem oder mehreren der Ansprüche 16 bis 21,
    **dadurch gekennzeichnet,**
    **dass** der Messwert für die Stromabschaltung zusätzlich durch eine Spannung proportional zum Verhältnis

$$\frac{\text{Einschaltzeit + Ausschaltzeit}}{\text{Einschaltzeit}}$$

    überlagert ist

23. Schaltnetzteil nach einem oder mehreren der Ansprüche 16 bis 22,
    **dadurch gekennzeichnet,**
    **dass** der Messwert für die Stromabschaltung zusätzlich durch eine Spannung des Gatesignals überlagert ist.

24. Schaltnetzteil nach einem oder mehreren der Ansprüche 16 bis 23,
    **dadurch gekennzeichnet,**
    **dass** die primäre Versorgungsspannung der Steuerschaltung (3,13,22) durch die gleichgerichtete, geregelte Primärspannung erfolgt und dass sekundär kein höheres Spannungspotential anliegt.

**Claims**

1. Method for controlling the output current and/or the output voltage of a primary switched mode power supply comprising a transformer (2, 12, 21) and a control circuit (3, 13, 22) in which, via the voltage drawn through connection of a winding (Nh, Np) of the transformer (2, 12, 21) to the input (U) of the control circuit (3, 13, 22), the energy stored in the transformer (2, 12, 21) is measured and the voltage application time of the primary circuit of the transformer (2, 12, 21) is varied in a control cycle as a function of a comparison of the measured value thus obtained with a reference value, **characterised in that** the voltage is in each case measured and temporarily stored at a fixed time interval after interruption of the primary circuit by disconnection of the control line (G) of an electronic switch (4, 14) and the measured value applied at the input (U) of the control circuit (3, 13, 22) is continuously monitored for the switched-on period of the electronic switch (4, 14) and, when the connection of the input (U) of the control circuit (3, 13, 22) to the winding (Nh, Np) of the transformer is absent or interrupted, the electronic switch (4, 14) is switched off or the switched-off period of the electronic switch (4, 14) is extended until the energy transmitted by the transformer assumes a minimum value.

2. Method according to claim 1, **characterised in that** the voltage is measured and temporarily stored when the voltage variations in the windings have died down.

3. Method according to either claim 1 or claim 2, **characterised in that** the transmitted energy is reduced until a small secondary-side load is sufficient to keep the voltage in the safe range.

4. Method according to claim 1, 2 or 3, **characterised in that**, during monitoring of the measured value applied at the input (U), the delay which occurs as a result of the switch-on pulse of the control circuit (3, 13, 21) is taken into account.

5. Method according to one or more of claims 1 to 4, **characterised in that** the output voltage is monitored and controlled by the control circuit (3, 13, 21) with a negative or positive measurement voltage at the input (U).

6. Method according to one or more of claims 1 to 5, **characterised in that** the output current is controlled by adjusting the pulse-duty factor of the secondary current.

7. Method according to one or more of claims 1 to 6, **characterised by** an adjustment of a constant pulse-duty factor of the secondary current.

8. Method according to one or more of claims 1 to 7, **characterised in that** the voltage is controlled by a constant switch-on pulse of the electronic switch (14) and a variable switch-off time.

9. Method according to one or more of claims 1 to 8, **characterised in that** the electronic switch (14) for the primary current (15) is activated via the control circuit (3, 13, 22) via an output signal (G2) which is delayed relative to the output signal (G), a series resistor (R13) being used if necessary.

10. Method according to one or more of claims 1 to 9, **characterised in that** the induced voltage of an auxiliary winding (Nh) of the transformer (2, 12, 21) is used as the measured value or **in that** a high-voltage IC is used for voltage control and the voltage of the primary main winding (Np) of the transformer (3, 12, 21) is used as the measured value.

11. Method according to one or more of claims 1 to 10, **characterised in that** the measured value is compared with an internal reference value of the control circuit (3, 13, 23) and **in that** the instant of application of voltage to the transformer main winding (Np) is adjusted via the measured value as a function of the amount by which the internal reference value is exceeded.

12. Method according to one or more of claims 1 to 11, **characterised in that** the renewed application of voltage to the primary circuit (15) takes place until a maximum current of the transformer (2, 12, 21) is reached.

13. Method according to one or more of claims 1 to 12, **characterised in that** the current of the transformer (2, 12, 21) is compared with a time-dependent reference value.

14. Method according to claim 13, **characterised in that** the value

$$\text{reference } (t_{on}) = \text{switch-off threshold}/(1 + \text{switch-off delay time}/t_{on}) \text{ (for } t_{on} > \text{minimum switch-on time)}$$

is used as the reference value, so the maximum current is kept constant.

15. Primary switched mode power supply for carrying out the method according to one or more of claims 1 to 14, comprising a transformer (2, 12, 21), of which the primary winding is connected in series to an electronic switch (4, 14), and a control circuit (3, 13, 22) which, through connection of a winding (Nh, Np) of the transformer (2, 12, 21) to the input (U) of the control circuit, picks off a voltage applied at the winding (Nh, Np) of the transformer and thus measures the energy stored in the transformer (2, 12, 21) and varies the voltage application time of the primary circuit of the transformer (2, 12, 21) in a control cycle as a function of a comparison of the measured value thus obtained with a reference value, **characterised in that** the control circuit measures and temporarily stores the voltage at the winding (Nh, Np) of the transformer at a fixed time interval after interruption of the primary circuit by disconnection of a control line (G) of an electronic switch (4, 14) and continuously monitors the measured value applied at the input (U), the control circuit (3, 13, 22), when the connection of the input (U) of the control circuit to the winding (Nh, Np) of the transformer is absent or interrupted, switching off the electronic switch (4, 14) or extending the switch-off period of the electronic switch (4, 14) until the energy transmitted by the transformer assumes a minimum value.

16. Switched mode power supply according to claim 15, **characterised in that** the control circuit (3, 13, 22) is supplied with voltage via a linear or switching controller.

17. Switched mode power supply according to claim 16, **characterised in that** an auxiliary winding (Nh) of the transformer (2, 12, 21) supplies a measurement voltage (U) for the control circuit (3, 13, 22) or **in that** the control circuit (3, 13, 22) consists of a high-voltage IC and the voltage of the primary main winding (Np) is applied as the measurement voltage and **in that** the primary circuit (15) comprises an electronic switch (14).

18. Switched mode power supply according to claim 16 or 17, **characterised in that** the electronic switch (14) for the primary circuit (15) can be activated by the control circuit (3, 13, 23) via a delayed output signal (G2), activation taking place, if necessary, via a series resistor (R13).

19. Switched mode power supply according to claim 16, 17 or 18, **characterised in that** the measured value for the induced voltage of the auxiliary winding (Nh) or the primary main winding (Np) can be stored at a fixed, adjustable instant after interruption of the primary circuit (15).

20. Switched mode power supply according to one or more of claims 16 to 19, **characterised in that** the instant of application of voltage to the transformer main winding (Np) can be adjusted as a result of the measured value as a function of the amount by which the internal reference value of the control circuit (3, 13, 22) is exceeded.

21. Switched mode power supply according to claim 20, **characterised in that** the primary circuit (15) can be switched on again as a function of the induced voltage of the auxiliary winding, preferably at a value of < 0.1 volt.

22. Switched mode power supply according to one or more of claims 16 to 21, **characterised in that** the measured value for the current disconnection is additionally superimposed by a voltage proportional to the ratio

$$\frac{\text{switch-on time} + \text{switch-off time}}{\text{switch-on time}}$$

23. Switched mode power supply according to one or more of claims 16 to 22, **characterised in that** the measured value for the current disconnection is additionally superimposed by a voltage of the gate signal.

24. Switched mode power supply according to one or more of claims 16 to 23, **characterised in that** the control circuit (3, 13, 22) is supplied with primary voltage via the rectified, controlling primary voltage and **in that** no higher voltage potential is applied on the secondary side.

**Revendications**

1. Procédé de régulation du courant de sortie et/ou de la tension de sortie d'une alimentation à découpage commandée côté primaire et comportant un transformateur (2, 12, 21) et un circuit de commande (3, 13, 22), l'énergie emmagasinée dans le transformateur (2, 12, 21) étant mesurée par l'intermédiaire de la tension prélevée sur la liaison d'un enroulement (Nh, Np) du transformateur (2, 12, 21) à l'entrée (U) du circuit de commande (3, 13, 22) et le temps d'alimentation en tension du circuit primaire du transformateur (2, 12, 21) dans un cycle de régulation variant en fonction d'une comparaison de la valeur mesurée ainsi déterminée avec une valeur de référence,

**caractérisé par le fait qu'**on mesure la tension respectivement dans un intervalle de temps fixe après l'interruption du circuit primaire par coupure de la ligne de commande (G) d'un interrupteur électronique (4, 14) et on la mémorise temporairement, on surveille constamment la valeur mesurée présente à l'entrée (U) du circuit de commande (3, 13, 22) pendant la durée de fermeture de l'interrupteur électronique (4, 14) et, en cas de liaison manquante ou interrompue de l'entrée (U) du circuit de commande (3, 13, 22) à l'enroulement (Nh, Np) du transformateur, on ouvre l'interrupteur électronique (4, 14) ou on prolonge la durée d'ouverture de l'interrupteur électronique (4, 14) jusqu'à ce que l'énergie transmise par le transformateur prenne une valeur minimale.

**2.** Procédé selon la revendication 1,
**caractérisé par le fait qu'**on mesure et mémorise temporairement la tension lorsque les oscillations de tension dans les enroulements se sont évanouies.

**3.** Procédé selon la revendication 1 ou 2,
**caractérisé par le fait qu'**on réduit l'énergie transmise jusqu'à ce qu'une petite charge côté secondaire suffise à maintenir la tension dans une plage non dangereuse.

**4.** Procédé selon la revendication 1, 2 ou 3,
**caractérisé par le fait que**, lors de la surveillance de la valeur mesurée présente à l'entrée (U), on prend en compte le retard apparaissant suite à l'impulsion de mise en circuit du circuit de commande (3, 13, 21).

**5.** Procédé selon l'une ou plusieurs des revendications 1 à 4,
**caractérisé par le fait que** la surveillance et la régulation de la tension de sortie s'effectuent au moyen du circuit de commande (3, 13, 21) avec une tension de mesure négative ou positive à l'entrée (U).

**6.** Procédé selon l'une ou plusieurs des revendications 1 à 5,
**caractérisé par le fait qu'**on régule le courant de sortie en réglant le taux d'impulsions du courant secondaire.

**7.** Procédé selon l'une ou plusieurs des revendications 1 à 6,
**caractérisé par** le réglage d'un taux d'impulsions constant du courant secondaire.

**8.** Procédé selon l'une ou plusieurs des revendications 1 à 7,
**caractérisé par le fait qu'**une régulation de tension s'effectue au moyen d'une impulsion de fermeture constante de l'interrupteur électronique (14) et d'un temps de coupure variable.

**9.** Procédé selon l'une ou plusieurs des revendications 1 à 8,
**caractérisé par le fait qu'**on commande l'interrupteur électronique (14) pour le courant primaire (15) au moyen du circuit de commande (3, 13, 22) par l'intermédiaire d'un signal de sortie (G2) qui est retardé par rapport au signal de sortie (G), une résistance série (R13) étant utilisée si nécessaire.

**10.** Procédé selon l'une ou plusieurs des revendications 1 à 9,
**caractérisé par le fait qu'**on utilise comme valeur mesurée la tension induite d'un enroulement auxiliaire (Nh) du transformateur (2, 12, 21) ou qu'on exploite un circuit intégré IC à haute tension pour la régulation de tension et qu'on utilise comme valeur mesurée la tension de l'enroulement principal primaire (Np) du transformateur (3, 12, 21).

**11.** Procédé selon l'une ou plusieurs des revendications 1 à 10,
**caractérisé par le fait qu'**on compare la valeur mesurée avec une valeur de référence interne du circuit de commande (3, 13, 23) et qu'on règle l'instant de l'alimentation en tension de l'enroulement principal de transformateur (Np) en fonction de la hauteur du dépassement de la valeur de référence interne par la valeur mesurée.

**12.** Procédé selon l'une ou plusieurs des revendications 1 à 11,
**caractérisé par le fait que** la nouvelle alimentation en tension du circuit primaire (15) s'effectue jusqu'à ce qu'un courant maximal du transformateur (2, 12, 21) soit atteint.

**13.** Procédé selon l'une ou plusieurs des revendications 1 à 12,
**caractérisé par le fait qu'**on compare le courant du transformateur (2, 12, 21) avec une valeur de référence dépendante du temps.

**14.** Procédé selon la revendication 13,
**caractérisé par le fait qu'**on utilise comme valeur de référence la valeur

$$\text{référence}(t_{ein}) = \text{seuil\_de\_coupure} / (1 + \text{retard\_de\_coupure} / t_{ein})$$

(pour $t_{ein}$ > temps de branchement minimal)

le courant maximal étant ainsi maintenu constant.

15. Alimentation à découpage commandée côté primaire pour la réalisation du procédé selon l'une ou plusieurs des revendications 1 à 14, comportant un transformateur (2, 12, 21) dont l'enroulement primaire est branché en série avec un interrupteur électronique (4, 14) et un circuit de commande (3, 13, 22) qui prélève par l'intermédiaire d'une liaison d'un enroulement (Nh, Np) du transformateur (2, 12, 21) à une entrée (U) du circuit de commande une tension présente à l'enroulement (Nh, Np) du transformateur et qui mesure ainsi l'énergie emmagasinée dans le transformateur (2, 12, 21), le temps d'alimentation en tension du circuit primaire du transformateur (2, 12, 21) dans un cycle de régulation variant en fonction d'une comparaison de la valeur mesurée ainsi déterminée avec une valeur de référence,
    **caractérisée par le fait que** le circuit de commande mesure dans un intervalle de temps fixe après l'interruption du circuit primaire par coupure d'une ligne de commande (G) d'un interrupteur électronique (4, 14) la tension à l'enroulement (Nh, Np) du transformateur et la mémorise temporairement, qu'il surveille constamment la valeur mesurée présente à l'entrée (U) et que, en cas de liaison manquante ou interrompue de l'entrée (U) du circuit de commande à l'enroulement (Nh, Np) du transformateur, le circuit de commande (3, 13, 22) ouvre l'interrupteur électronique (4, 14) ou prolonge la durée d'ouverture de l'interrupteur électronique (4, 14) jusqu'à ce que l'énergie transmise par le transformateur prenne une valeur minimale.

16. Alimentation à découpage selon la revendication 15,
    **caractérisée par le fait que** l'alimentation en tension du circuit de commande (3, 13, 22) s'effectue au moyen d'un régulateur linéaire ou de commutation.

17. Alimentation à découpage selon la revendication 16,
    **caractérisée par le fait qu'**un enroulement auxiliaire (Nh) du transformateur (2, 12, 21) fournit une tension de mesure (U) pour le circuit de commande (3, 13, 22) ou que le circuit de commande (3, 13, 22) est constitué d'un circuit intégré IC à haute tension et la tension de l'enroulement principal primaire (Np) est présente comme tension de mesure et que le circuit primaire (15) comporte un interrupteur électronique (14).

18. Alimentation à découpage selon la revendication 16 ou 17,
    **caractérisée par le fait que** l'interrupteur électronique (14) pour le circuit primaire (15) peut être commandé par le circuit de commande (3, 13, 23) par l'intermédiaire d'un signal de sortie retardé (G2), la commande s'effectuant par l'intermédiaire d'une résistance série (R13) si nécessaire.

19. Alimentation à découpage selon la revendication 16, 17 ou 18,
    **caractérisée par le fait que** la valeur mesurée pour la tension induite de l'enroulement auxiliaire (Nh) ou de l'enroulement principal primaire (Np) à un instant réglable et fixe après l'interruption du circuit primaire (15) peut être mémorisée.

20. Alimentation à découpage selon l'une ou plusieurs des revendications 16 à 19,
    **caractérisée par le fait que** l'instant de l'alimentation en tension de l'enroulement principal de transformateur (Np) est réglable en fonction de la hauteur du dépassement de la valeur de référence interne du circuit de commande (3, 13, 22) par la valeur mesurée.

21. Alimentation à découpage selon la revendication 20,
    **caractérisée par le fait que** le circuit primaire peut être remis en circuit en fonction de la tension induite de l'enroulement auxiliaire, de préférence pour une valeur < 0,1 Volt.

22. Alimentation à découpage selon l'une ou plusieurs des revendications 16 à 21,
    **caractérisée par le fait qu'**à la valeur mesurée pour la coupure de courant est superposée en plus une tension proportionnelle au quotient

(temps de mise en circuit + temps de mise hors circuit)

/ temps de mise en circuit.

**23.** Alimentation à découpage selon l'une ou plusieurs des revendications 16 à 22,
**caractérisée par le fait qu'**une tension du signal de grille est superposée à la valeur mesurée pour la coupure de courant.

**24.** Alimentation à découpage selon l'une ou plusieurs des revendications 16 à 23,
**caractérisée par le fait que** l'alimentation en tension primaire du circuit de commande (3, 13, 22) s'effectue au moyen de la tension primaire redressée et régulée et qu'il n'y a pas côté secondaire un potentiel de tension supérieur.

Fig. 1

Fig. 2

EP 1 211 794 B1

X9  R10  D10  D11  L10

C10  C11  R11

R12

GND

IC10

VP  U
VT  L
P   VDD
GND  Q

L11  C13

T10

R13

4

3

C12

R17

R18

C15

R15  D12

C16  R18

R14

C14

GND

D100

C100

N3

C101  R100

LTG100

LTG101

Ua

5

6

2

1

17

Fig. 3

EP 1 211 794 B1

Fig. 4

EP 1 211 794 B1